Europäisches Patentamt

European Patent Office

Office européen des brevets

(19)

(11) Numéro de publication : **0 028 171**
**B1**

# (12) FASCICULE DE BREVET EUROPÉEN

(45) Date de publication du fascicule du brevet :
13.06.84

(21) Numéro de dépôt : 80401391.0

(22) Date de dépôt : 02.10.80

(51) Int. Cl.³ : **B 65 D 23/08**, C 03 C 17/32, C 03 C 17/34

(54) **Procédé pour revêtir d'une gaine poreuse souple des corps creux tels que des flacons en verre et corps creux gainés par ce procédé.**

(30) Priorité : 05.10.79 FR 7924815

(43) Date de publication de la demande :
06.05.81 Bulletin 81/18

(45) Mention de la délivrance du brevet :
13.06.84 Bulletin 84/24

(84) Etats contractants désignés :
**BE DE FR GB IT NL**

(56) Documents cités :
**DE-A- 1 806 359**
**DE-A- 2 609 931**
**DE-A- 2 610 894**
**FR-A- 1 426 058**
**FR-A- 2 008 419**
**US-A- 3 007 594**
**US-A- 3 097 961**
**Le dossier contient des informations techniques présentées postérieurement au dépôt de la demande et ne figurant pas dans le présent fascicule.**

(73) Titulaire : **SAINT-GOBAIN EMBALLAGE**
**2 place de la Libération**
**F-92306 Levailois Perret (FR)**

(72) Inventeur : **Caron, Jean**
**Route de l'Ancien Pont d'Incheville**
**F-80770 Beauchamps (FR)**

(74) Mandataire : **Eudes, Marcel et al**
**Saint-Gobain Recherche 39 Quai Lucien Lefranc**
**F-93304 Aubervilliers Cedex (FR)**

## Description

L'invention a pour objet un procédé de revêtement de corps creux tels que des flacons en verre. L'invention concerne également les corps creux revêtus par ce procédé d'une gaine protectrice poreuse et souple.

On a déjà proposé d'envelopper le corps de récipients ou corps creux tels que des bouteilles en verre dans des garnitures en matière plastique poreuse de formes diverses obtenues par moulage. Ces garnitures permettent de donner au produit final des formes variées et de protéger la bouteille contre les chocs mais il est difficile d'obtenir ainsi une gaine d'épaisseur faible et cependant uniforme, de sorte que les garnitures que l'on obtient alors manquent en particulier de résistance au déchirage.

On connaît également divers types de récipients protégés extérieurement par des gaines en carton ou en matières plastiques diverses, généralement cylindriques, notamment des gaines de structure poreuse revêtant le fût de bouteilles destinées à renfermer des boissons variées. Ces gaines sont habituellement constituées de polystyrène expansé. Elles sont obtenues à partir de manchons rétractables d'un diamètre correspondant à celui de la bouteille, enfilés sur celles-ci, puis rétractés par l'action de la chaleur, de façon à enserrer le fût.

Il est donc nécessaire d'utiliser des tubes de diamètre différent pour chaque type de bouteille et l'on ne peut protéger que des récipients de forme sensiblement cylindrique ; enfin, la gaine ne protège pas le fond et ne couvre que partiellement l'épaule et le talon.

Grâce au caractère poreux du produit qui les constitue et donc à sa souplesse, ces gaines apportent une protection efficace contre les chocs, mais ainsi que l'on vient de l'expliquer, cette protection n'est pas totale.

Il existe donc divers types de récipients protégés pour lesquels les solutions ci-dessus ne peuvent convenir : il s'agit notamment des flacons aérosols, flacons sous pression renfermant un gaz liquéfié, dissous ou comprimé, et que l'on munit pour cette raison d'une gaine remontant jusqu'au-dessous de la carnette. Une telle gaine est constituée d'une couche de matière plastique non poreuse et elle est obtenue par pulvérisation, au trempé en lit fluidisé ou, plus simplement et de préférence, au trempé dans un bain liquide. L'enveloppe ainsi formée est percée de un ou plusieurs trous d'évent, dont l'un est généralement situé dans le fond du flacon. Elle peut encore, le cas échéant, être collée sur le flacon. Après sertissage de la valve sur la bague, l'enveloppe, en cas de casse accidentelle du flacon, retient tous les fragments de verre, le gaz propulseur s'échappant par le ou les trous d'évent.

Pour opérer au trempé en bain liquide, on utilise un plastisol qui se trouve sensiblement à la température ambiante. Le récipient, préchauffé à une température suffisante pour assurer la gélification du produit, est plongé rapidement dans ce bain, puis extrait progressivement du liquide en une à deux secondes, pour être cuit pendant 3 à 6 minutes à une température de cuisson généralement supérieure d'une cinquantaine à une centaine de degrés à celle du récipient au moment du trempage.

On peut utiliser, avantageusement, une installation possédant un bac à trop-plein et une pompe circulante telle que l'installation décrite dans le brevet FR numéro 1 210 420, la vitesse de remontée du récipient étant commandée par came, en fonction des variations du diamètre du récipient, comme l'indique ce brevet.

Il est également connu, selon le brevet FR 1 426 058 de revêtir, préalablement à l'application d'un plastisol vinylique, le récipient en verre d'une couche de primaire d'adhérence, notamment d'une couche à base de polyméthacrylate de méthyle et d'un aminoalkylalkoxysilane, pour accroître l'adhérence de la résine vinylique à la surface du verre. Le brevet FR 1 426 058 met en évidence l'influence de ce traitement de surface sur la résistance au pelage des gaines vinyliques et sur la tenue aux chocs des récipients de verre revêtus de gaines vinyliques non poreuses ou d'une gaine de mousse vinylique.

Par ailleurs, la demande de brevet FR 2 008 419 divulgue une composition convenant à la fabrication de mousse de polymères d'halogénure de vinyle qui comprend de l'azodicarbonamide en tant qu'agent gonflant et un mélange activateur comportant des sels de plomb et de zinc et de baryum, calcium ou magnésium, d'acides organiques, de phénols et d'alkylphénols.

L'invention vise à fournir des récipients au corps entièrement protégé par une gaine souple, qui réunisse en les améliorant les avantages des solutions antérieures et qui assure en outre une bonne isolation thermique, cette gaine entourant complètement les récipients, jusqu'au niveau de la bague, et ayant une structure poreuse, à cellules fermées, avec ou sans trou d'évent.

A cet effet, l'invention a pour objet un procédé pour le revêtement de corps creux tels que des flacons en verre avec une gaine protectrice, ce procédé étant du type dans lequel on opère au trempé dans un bain liquide, en plongeant dans un plastisol vinylique le corps creux préalablement chauffé à une température suffisante pour obtenir la formation à sa surface d'un gel de résine vinylique, et en procédant ensuite à la cuisson du corps creux ainsi revêtu, ce procédé étant caractérisé en ce que le bain dans lequel est plongé le corps creux contient du chlorure de polyvinyle, de l'azodicarbonamide en tant qu'agent gonflant agissant à une température supérieure à la température de gélification de la résine vinylique, et un sel complexe de baryum, de cadmium et de zinc, ou encore un phtalate dibasique de plomb, en tant que stabilisant d'expansion.

Des agents tensio-actifs sont introduits dans le bain, de façon connue en soi, pour stabiliser le dépôt, et un agent régulateur d'expansion permet d'obtenir une texture uniforme.

L'ajustage de la température du flacon au moment où il est introduit dans le bain, compte tenu bien entendu du temps de séjour dans ce bain, permet d'obtenir un taux d'expansion régulier susceptible cependant de décroître de l'intérieur vers l'extérieur de la gaine si l'on diminue la température de préchauffage du flacon.

La qualité de surface de la gaine de mousse obtenue est légèrement mate, mais suffisamment régulière pour permettre ultérieurement d'appliquer des décors, par exemple, en sérigraphie.

Il est possible, de façon connue en soi, de revêtir au préalable le flacon d'une couche de primaire d'adhérence (colles acryliques et silanes en solution dans un mélange de solvants appropriés), ou même d'une première couche conventionnelle destinée à augmenter la résistance mécanique du revêtement.

On peut également revêtir d'une gaine conventionnelle, par trempage, des flacons préalablement revêtus d'une gaine de mousse.

Le procédé conforme à l'invention conduit à une gaine poreuse que son élasticité et son excellente capacité d'amortissement des chocs permettent d'employer avec avantage sur des récipients ou flacons contenant des produits sous pression tels que des bouteilles de boissons gazeuses et surtout des flacons aérosols.

Dans ce dernier cas, on obtient une résistance quasi totale aux chocs normaux se produisant à la suite d'une chute de 1,80 m de hauteur sur une surface plane en béton de 10 cm d'épaisseur. En cas de rupture du flacon obtenue par chute de 1,80 m de hauteur sur un obstacle anguleux, on remarque que la protection apportée est comparable à celle obtenue avec des flacons revêtus d'une gaine conventionnelle, tombant de la même hauteur sur une surface plane, c'est-à-dire que les morceaux restent emprisonnés à l'intérieur de l'enveloppe.

Sur les récipients ordinaires, une telle gaine permet ainsi d'amincir les parois, en obtenant un allègement supplémentaire, grâce à l'excellente protection contre les chocs qu'elle fournit, non seulement sur les parois latérales, mais également sur l'épaule et sur le fond.

A poids égal, une gaine de ce type apporte une isolation thermique supérieure à celle d'une gaine pleine et, enveloppant entièrement le récipient, elle peut ainsi être utilisée sur des récipients destinés à conserver le froid ou le chaud, tels que des vases de Dewar et des bouteilles « Thermos ».

On donne ci-après un exemple de mise en œuvre de l'invention.

## Exemple

Cet exemple concerne la protection de flacons aérosols à l'aide d'une gaine simple de chlorure de polyvinyle expansé à cellules fermées.

On utilise un bain ayant la composition suivante, en parties pondérales :

| | |
|---|---|
| — Poudre de chlorure de polyvinyle en microsuspension | 100 |
| — Plastifiants : dioctylphtalate | 41 ± 5 |
| dibutylphtalate | 30 ± 5 |
| — Agent gonflant : azodicarbonamide | 1,5 ± 0,5 |
| — Stabilisant d'expansion (sels complexes de baryum, de cadmium et de zinc) | 2,5 ± 0,5 |
| — Charges (en fonction de la résistance désirée) | 0 à 40 |
| — Tensio-actif anionique (alkylphénol condensé et estérifié en solution dans un mélange de solvants peu volatils) | 1,6 à 3 |

Les conditions du traitement sont les suivantes :

| | |
|---|---|
| — Température de bain | 20 à 30 °C |
| — Température de préchauffage des récipients avant trempage | 130 à 150 °C |
| — Température de cuisson à la sortie du bain | 190 à 220 °C |

On obtient ainsi, sur des flacons aérosols de 150 cm³ pesant 160 grammes, une gaine à pores fermés, non collée, d'un poids de 30 grammes, égal à celui de gaines en chlorure de polyvinyle du type classique, mais d'une densité de 0,45 au lieu de 1,25 pour ces dernières.

Des essais comparatifs de résistance aux chocs ont été effectués avec des flacons aérosols, identiques de forme et de poids, conditionnés avec différents propulseurs, les premiers flacons étant gainés conformément à l'invention et les autres revêtus d'une gaine en chlorure de polyvinyle d'un type classique. On a fait subir à ces flacons des chutes répétées d'une hauteur de 1,80 m sur un sol en béton. Les résultats de ces essais sont rassemblés dans le tableau suivant :

Tableau

| Nombre de chutes | Gaine pleine d'un type classique (densité : 1,25) | | Gaine poreuse à cellules fermées selon l'invention (densité : 0,45) | |
|---|---|---|---|---|
| | Casse en % | Casse cumulée | Casse en % | Casse cumulée |
| 1re chute | 3 | 3 | 0 | 0 |
| 2e chute | 80 | 83 | 0 | 0 |
| 3e chute | 10 | 93 | 0 | 0 |
| 4e chute | 5 | 98 | 0 | 0 |
| 5e chute | 2 | 100 | 0 | 0 |
| 15e chute | | | 0 | 0 |

Les résultats de ces essais font donc ressortir clairement les avantages appréciables apportés par le procédé conforme à l'invention par rapport à la technique connue.

En substituant aux stabilisants d'expansion à base de baryum, cadmium et zinc un phtalate dibasique de plomb, à raison de 2 à 3 % relativement au poids de la résine, on peut réaliser un revêtement d'une densité encore plus faible (0,30 à 0,35) permettant d'obtenir une excellente isolation thermique et utilisable sur des récipients isolants tels que des vases de Dewar, afin d'améliorer la durée de conservation du froid ou du chaud, tout en diminuant de façon très nette la fragilité du récipient.

## Revendications

1. Procédé pour le revêtement de corps creux tels que des flacons en verre avec une gaine protectrice poreuse, ce procédé étant du type dans lequel on opère au trempé dans un bain liquide, en plongeant dans un plastisol vinylique le corps creux préalablement chauffé à une température suffisante pour obtenir la formation à sa surface d'un gel de résine vinylique et en procédant ensuite à la cuisson du corps creux ainsi revêtu, ce procédé étant caractérisé en ce que le bain dans lequel est plongé le corps creux contient du chlorure de polyvinyle, de l'azodicarbonamide en tant qu'agent gonflant agissant à une température supérieure à la température de gélification de la résine vinylique, et un sel complexe de baryum, de cadmium et de zinc, ou encore un phtalate dibasique de plomb, en tant que stabilisant d'expansion.

2. Procédé suivant la revendication 1, caractérisé en ce que le taux d'expansion de la gaine poreuse décroît de l'intérieur vers l'extérieur de la gaine si l'on diminue la température de préchauffage du flacon, pour un temps de séjour donné du flacon dans le bain.

## Claims

1. Process covering hollow bodies such as glass bottles with a porous protective coating, the process being of the type in which immersion in a bath of liquid is carried out by plunging into a vinyl plastisol the hollow body which is previously heated to a temperature sufficient to cause formation of a gel of vinyl resin at its surface, followed by heating of the hollow body thus covered, the process being characterised in that the bath in which the hollow body is immersed contains polyvinyl chloride, azodicarbonamide as a blowing agent acting at a temperature higher than the gelling temperature of the vinyl resin, and a complex salt of barium, cadmium and zinc, or a dibasic lead phthalate, as an expansion stabiliser.

2. Process according to claim 1, characterised in that the degree of expansion of the porous coating decreases from the inside to the outside of the coating as the temperature of preheating of the bottle is reduced, for a given time of immersion of the bottle in the bath.

## Ansprüche

1. Verfahren zum Überziehen von Hohlkörpern, wie Flakons aus Glas, mit einer porösen Schutzhülle durch Eintauchen in ein Flüssigkeitsbad, bei welchem der Hohlkörper, welcher zuvor auf eine Temperatur erwärmt wird, die zur Bildung eines Gels aus Vinylharz auf der Oberfläche ausreicht, in ein Vinylharz-Plastisol getauch wird, und dann das Brennen des überzogenen Hohlkörpers erfolgt, dadurch gekennzeichnet, daß das Bad, in welches der Hohlkörper getaucht wird, Polyvinylchlorid, Azodicarbonamid als Quellmittel, wirksam bei einer Temperatur höher als die Temperatur der Gelbildung des Vinylharzes, sowie ein komplexes Salz von Barium, Kadmium und von Zink, oder noch ein zweibasisches Bleiphtalat als Stabilisierungsmittel für die Expansion enthält.

2. Verfahren nach Anspruch 1, dadurch gekennzeichnet, daß der Expansionsgrad der Schutzhülle von innen nach außen bezüglich der Schutzhülle abnimmt, wenn man die Temperatur der Vorerhitzung des Flakons für eine vorgegebene Haltezeit des Flakons im Bad verringert.